# EUROPÄISCHE PATENTANMELDUNG

(11) **EP 4 707 565 A1**
(43) Veröffentlichungstag der Anmeldung: **11.03.2026**
(21) Anmeldenummer: 25196142.1
(22) Anmeldetag: 15.08.2025
(51) Int. Cl.: F02C 7/06, F02K 3/06

(54) **GASTURBINENTRIEBWERK FÜR EIN FLUGZEUG**

(30) Priorität: 30.08.2024 DE 102024124928
(71) Anmelder: Rolls-Royce Deutschland Ltd & Co KG, 15827 Blankenfelde-Mahlow (DE)
(72) Erfinder: VENTER, Gideon Daniel, 15827 Blankenfelde-Mahlow (DE); SCHACHT, Michael, 15827 Blankenfelde-Mahlow (DE)

(57) **Zusammenfassung**

Es wird ein Gasturbinentriebwerk (1) für ein Flugzeug mit einem Ölsystem (2) beschrieben, das einen Öltank (10) und wenigstens eine Welle (3) umfasst, die über Lagereinheiten (4 bis 6) gehäuseseitig drehbar gelagert ist. Wenigstens eine der Lagereinheiten (4 bis 6) und der Öltank (10) sind in einer Lagerkammer (9) angeordnet. Ein Innenraum (10B) eines Gehäuses (10A) des Öltanks (10) steht über eine Entlüftungsleitung (31) mit einem Entlüfter (33) in Verbindung, in dessen Bereich der Ölanteil der Luft reduzierbar ist

## Beschreibung

Die vorliegende Offenbarung betrifft ein Gasturbinentriebwerk für ein Flugzeug gemäß der im Oberbegriff des Patentanspruches 1 näher definierten Art.

Der Treibstoffverbrauch von Flugzeugen wird von verschiedenen Faktoren beeinflusst. Neben dem Flugprofil, dem Gesamtgewicht eines Flugzeuges, den Wetterbedingungen, der Flughöhe, der Flugroute und der Triebwerkseffizienz beeinflusst auch die Aerodynamik bzw. das Design des gesamten Flugzeugs den Treibstoffverbrauch eines Flugzeuges.

Generell haben größere Flugzeuge ein besseres Verbrauchsverhalten pro Passagier als kleinere Flugzeuge. Um das Verbrauchsverhalten vor allem größerer Flugzeuge weiter zu verbessern, wird zunehmend versucht, die äußeren Abmessungen der Fluggasturbinen zu minimieren.

Gasturbinentriebwerke sind bekannterweise mit Ölsystemen ausgestattet, um im Betrieb verschiedene Bereiche mit Öl versorgen zu können. Um im Falle einer Beschädigung durch sich lösende Triebwerksteile einen vollständigen Ölverlust zu vermeiden, werden unterschiedlichste Maßnahmen ergriffen. Bei einer ersten Gruppe bekannter Flugzeugsysteme ist ein Öltank des Ölsystems eines Gasturbinentriebwerkes innerhalb des Flugzeuges angeordnet. Dies bietet die Möglichkeit, ein solches Gasturbinentriebwerk möglichst klein ausführen zu können. Diese Vorgehensweise erhöht jedoch den konstruktiven Aufwand für die Ölversorgung des Gasturbinentriebwerkes, da das Öl besonders für die Versorgung von Lagereinheiten von Antriebswellen eines Gasturbinentriebwerks von dem im Flugzeug angeordneten Öltank in das Innere des Gasturbinentriebwerkes hinein und das Rücklauföl anschließend wieder zurück in das Flugzeug zum Öltank zu führen ist.

Eine zweite Gruppe von Gasturbinentriebwerken umfasst zumindest einen Öltank, der im Flugzeug angeordnet ist, und einen weiteren Öltank, der im Gasturbinentriebwerk im Bereich eines Nebenaggregategetriebes angeordnet ist. Ein Ölverlust im Ölsystem eines Gasturbinentriebwerks kann aus dem Öltank des Flugzeugs ausgeglichen werden, indem Öl aus dem flugzeugseitigen Öltank durch die Flugbesatzung ferngesteuert in den Öltank des Gasturbinentriebwerks nachgefüllt wird.

Die Anordnung des Öltanks im Gasturbinentriebwerk im Bereich des Nebenaggregategetriebes erschwert jedoch eine aerodynamische Optimierung eines Gasturbinentriebwerkes.

Der vorliegenden Offenbarung liegt die Aufgabe zugrunde, ein Gasturbinentriebwerk für ein Flugzeug mit einem Öltank eines gasturbinenseitigen Ölsystems zur Verfügung zu stellen, bei dem eine Ölversorgung verschiedener Komponenten des Gasturbinentriebwerkes mit geringem konstruktivem Aufwand erfolgt und das aerodynamisch optimiert ausgeführt ist.

Erfindungsgemäß wird diese Aufgabe mit einem Gasturbinentriebwerk mit den Merkmalen des Patentanspruches 1 gelöst. Vorteilhafte Weiterbildungen sind Gegenstand der Unteransprüche sowie der nachfolgenden Beschreibung.

Es wird ein Gasturbinentriebwerk für ein Flugzeug mit einem Ölsystem vorgeschlagen, das mit einem Öltank ausgebildet ist. Wenigstens eine Welle des Gasturbinentriebwerks ist über Lagereinheiten gehäuseseitig drehbar gelagert. Zumindest eine der Lagereinheiten ist in einer Lagerkammer angeordnet.

Der Öltank wird in einem bisher nicht genutzten Bauraum innerhalb der Lagerkammer angeordnet. Dies bietet die Möglichkeit, das Gasturbinentriebwerk im Vergleich zu bekannten Gasturbinentriebwerken mit geringeren äußeren Abmessungen und damit aerodynamisch optimiert auszuführen oder bei gleichen Abmessungen zusätzliche Komponenten innerhalb eines Bauraumes des Gasturbinentriebwerks anzuordnen, der bisher für den Öltank vorgesehen war. Wird die Anordnung des Öltanks in der Lagerkammer zur Verbesserung der Aerodynamik durch Verringerung der äußeren Abmessungen des Gasturbinentriebwerks genutzt, so trägt dies dazu bei, den Treibstoffverbrauch eines mit dem Gasturbinentriebwerk gemäß der vorliegenden Offenbarung ausgestatteten Flugzeugs im Vergleich zu Flugzeugen mit aerodynamisch ungünstiger gestalteten Flugtriebwerken auf einfache Weise zu verringern.

Des Weiteren kann auf eine feuerfeste Ausführung des Öltanks verzichtet werden, da das Innere der Lagerkammer keine sicherheitskritische Feuerzone des Gasturbinentriebwerkes darstellt.

Zudem wird durch die Anordnung des Öltanks in der Lagerkammer ein Ölverlust des Gasturbinentriebwerkes selbst bei Vorliegen einer Leckage im Bereich des Öltanks reduziert bzw. vermieden, da aus dem Öltank unkontrolliert austretendes Öl in der Lagerkammer aufgefangen und über einen Rücklauf der Lagerkammer in dem Ölkreislauf des Ölsystems zurückführbar ist.

Weiterhin ist auch die Wahrscheinlichkeit einer Beschädigung durch sich lösende Triebwerksteile sowie durch Geschosse gegenüber einer Anordnung des Öltanks außerhalb eines Triebwerkskerns und damit außerhalb der Lagerkammer, insbesondere im Bereich eines Nebenaggregategetriebes mit geringem Aufwand reduziert, was sich positiv auf das Betriebs-Zulassungsverfahren eines Gasturbinentriebwerks auswirkt.

Darüber hinaus steht ein Innenraum eines Gehäuses des Öltanks über eine Entlüftungsleitung mit einem Entlüfter bzw. einem Breather in Verbindung, in dessen Bereich der Ölanteil der Luft reduzierbar ist. Damit wird auf einfache Weise der Ölverlust des Gasturbinentriebwerkes im Betrieb minimiert.

Ein Innenraum der Lagerkammer kann über eine Entlüftungsleitung mit dem Entlüfter in Verbindung stehen, um den Ölverlust des Gasturbinentriebwerks im Betrieb entsprechend gering zu halten.

Zudem besteht die Möglichkeit, dass ein Innenraum eines Gehäuses des Öltanks über eine Entlüftungsleitung mit einem Innenraum der Lagerkammer in Verbindung steht. Dann ist eine Entlüftung des Öltanks auf konstruktiv einfache Art und Weise in die Lagerkammer hinein möglich, ohne einen Ölverlust des Ölsystems zu erhöhen.

Bei einer Weiterbildung des Gasturbinentriebwerks gemäß der vorliegenden Offenbarung kann es vorgesehen sein, dass der Innenraum der Lagerkammer mit einem Entlüfter bzw. Breather in Verbindung steht, in dessen Bereich der Ölanteil der Luft reduzierbar ist.

Um einen unerwünschten Druckanstieg insbesondere in der Lagerkammer und auch im Öltank zu vermeiden, kann Luft, deren Ölbeladung im Entlüfter gegenüber der Ölbeladung der Luft im Öltank und gegenüber der Ölbeladung der Luft in der Lagerkammer reduziert wurde, aus dem Entlüfter über eine Luftleitung an eine Umgebung des Gasturbinentriebwerks ausleitbar sein.

In der Entlüftungsleitung des Öltanks kann ein Druckbegrenzungsventil angeordnet sein. Über das Druckbegrenzungsventil kann die Entlüftungsleitung des Öltanks unterhalb eines definierten Druckes im Gehäuse des Öltanks in Richtung der Lagerkammer oder des Entlüfters gesperrt werden. Dadurch wird auf einfache Art und Weise insbesondere während großen Flughöhen ein unerwünschter Druckabfall im Öltank vermieden. Dies bietet die Möglichkeit, eine mit den Öltank in Verbindung stehende Förderpumpe saugseitig mit einem definierten Mindestdruckniveau beaufschlagen zu können. Dabei liegt ein solches Mindestdruckniveau vorteilhafter Weise oberhalb eines Schwelldruckwertes, oberhalb dem die Funktionsweise der Förderpumpe beeinträchtigende Kavitation im Bereich der Förderpumpe vermieden wird.

Wenn eine Ölentnahmeleitung in Einbaulage des Öltanks in einen Bodenbereich des Gehäuses des Öltanks mündet bzw. von einem unteren Bereich des Gehäuses des Öltanks abzweigt, kann nahezu das gesamte im Öltank vorhandene Ölvolumen zur Schmierung und Kühlung und gegebenenfalls zur hydraulischen Betätigung verschiedener Baugruppen des Gasturbinentriebwerks im Ölsystem verwendet werden. Die Ölentnahmeleitung kann mit einer Saugseite einer Förderpumpe in Verbindung stehen, die außerhalb der Lagerkammer angeordnet ist. Dadurch können ein im Öltank vorzusehendes Ölvolumen sowie damit korrelierende äußere Abmessungen und letztendlich ein Bauraumbedarf des Öltanks im Vergleich zu bekannten Lösungen, bei welchen ein nicht nutzbares Ölvolumen größer ist, reduziert werden.

Weiterhin kann es vorgesehen sein, dass am Gehäuse des Öltanks ein Ölabscheider angeordnet ist, in dessen Bereich im Betrieb des Gasturbinentriebwerks aus einem Luft-Öl-Volumenstrom Öl abscheidbar ist. Abgeschiedenes Öl kann somit auf konstruktiv einfache und in bauraumgünstiger Art und Weise über eine Ölleitung aus dem Ölabscheider in den Öltank und die vorgereinigte Luft über eine Luftleitung aus dem Ölabscheider in Richtung des Entlüfters führbar sein, in dessen Bereich der Ölanteil der vorgereinigten Luft weiter reduzierbar ist.

Zudem kann es vorgesehen sein, dass in den Ölabscheider ein Luft-Öl-Volumenstrom von den Lagereinheiten über eine Rücklaufleitung des Ölsystems eingeleitet wird.

Der Öltank ist bei einer weiteren Ausführungsform des Gasturbinentriebwerkes gemäß der vorliegenden Offenbarung an den innerhalb der Lagerkammer zur Verfügung stehenden Bauraum angepasst und gleichzeitig ist das im Inneren des Öltanks gespeicherte nicht nutzbare Ölvolumen weitestgehend reduziert. Hierfür kann ein in Einbaulage oberer Bereich des Gehäuses des Öltanks kreisringförmig ausgeführt sein. Weiterhin kann ein sich daran anschließender unterer Bereich in Umfangsrichtung des Gehäuses des Öltanks aufeinander zulaufende abgeflachte und das Volumen des Öltanks begrenzende Gehäuseseiten aufweisen.

Um über den gesamten Betriebsbereich eines mit dem Gasturbinentriebwerk gemäß der vorliegenden Offenbarung ausgestatteten Luftfahrzeugs das nicht nutzbare Ölvolumen, das dem Öltank aufgrund seiner konstruktiven Ausgestaltung nicht entnehmbar ist, möglichst gering zu halten, kann sich der untere Gehäusebereich des Öltanks ausgehend vom oberen Gehäusebereich in Richtung auf ein unteres Ende des Gehäuses in axialer Richtung stetig verjüngen.

Mit anderen Worten weist das Gehäuse des Öltanks außenseitig somit nicht nur in Umfangsrichtung im unteren Bereich des Gehäuses im Wesentlichen eine Dreieckform auf, sondern ist auch in einer Seitenansicht mit einer in Hochrichtung des Öltanks nach unten dreieckig zulaufenden Form ausgeführt.

Das Gehäuse des Öltanks kann in radialer Richtung eine vorzugsweise kreisförmige Aussparung begrenzen, die die Welle in axialer Richtung durchgreift. Bei einer solchen Ausführungsform des Gasturbinentriebwerks gemäß der vorliegenden Offenbarung wird ein bislang ungenutzter Bauraum innerhalb der Lagerkammer auf konstruktiv einfache sowie in bauraumgünstiger Art und Weise für die Anordnung des Öltanks genutzt. Zudem ist der derart ausgeführte Öltank mit geringem konstruktiven Aufwand auch in bestehende Gasturbinentriebwerkssysteme integrierbar.

Das Gehäuse kann mehrere Leitungen aufweisen, die in axialer Richtung von einer ersten Seitenwand des Gehäuses des Öltanks durch den Innenraum des Öltanks bis zu einer zweiten Seitenwand des Gehäuses verlaufen.

Dabei besteht die Möglichkeit, dass durch wenigstens eine der Leitungen Öl durch den Öltank in Richtung einer der Lagereinheiten in der Lagerkammer und durch wenigstens eine weitere der Leitungen Sperrluft zur Abdichtung der Lagerkammer führbar ist.

Dadurch werden eine Beeinträchtigung der Ölversorgung der Lagereinheit und der Abdichtung der Lagerkammer durch den in der Lagerkammer angeordneten Öltank mit geringem konstruktivem Aufwand verhindert.

Der Öltank kann über ein Druckbefüllventil mit einer Remote-Befülleinheit in Wirkverbindung bringbar sein, über die Öl automatisiert von einer Förderpumpe aus einem weiteren flugzeugseitigen Öltank in den Öltank führbar ist. Zusätzlich kann der Öltank über das Druckbefüllventil mit einer manuellen Druck-Befülleinheit in Wirkverbindung bringbar sein, von der ausgehend Öl manuell und druckgetrieben in den Öltank einleitbar ist.

Eine die manuelle Druck-Befülleinheit und das Druckbefüllventil verbindende Ölleitung kann durch eine Nebenstromstrebe verlaufen, die in radialer Richtung zwischen zwei kreisringartigen Gehäusebereichen verläuft und die diese fest miteinander verbindet. Dann kann die manuelle Druck-Befülleinheit auf einfache Art und Weise beispielsweise im Inneren einer Triebwerksgondel und nahe einer Außenseite der Triebwerksgondel angeordnet werden und der Öltank mit geringem Montageaufwand zum Ausgleich von Ölverlust mit Öl betankt werden.

Das Druckbefüllventil kann einen Ventilkolben aufweisen, der in drucklosem Zustand von einem Federelement dichtend an einen ersten Ventilsitz angelegt wird und die Verbindungen zwischen der Remote-Befülleinheit und dem Öltank sowie zwischen der manuellen Druck-Befülleinheit und dem Öltank sperrt. Bei Anliegen eines Öffnungsdruck seitens der Remote-Befülleinheit oder seitens der manuellen Druck-Befülleinheit kann der Ventilkolben die jeweilige Verbindung freigeben und der Öltank automatisch ausgehend vom Flugzeug oder von einer Bedienperson manuell befüllt werden.

Im Bereich eines ersten Anschlusses des Druckbefüllventils, der mit der Remote-Befülleinheit in Verbindung steht, und im Bereich eines zweiten Anschlusses, der mit der manuellen Druck-Befülleinheit in Verbindung steht, kann jeweils ein Rückschlagventil angeordnet sein. Dabei besteht die Möglichkeit, dass die Rückschlagventile den jeweils zugeordneten Anschluss freigeben, wenn der Druck im Druckbefüllventil jeweils kleiner ist als in den Befüllleitungen zwischen der Remote-Befülleinheit und dem Druckbefüllventil sowie zwischen der manuellen Druck-Befülleinheit und dem Druckbefüllventil.

Der Ventilkolben kann in drucklosem Zustand zusätzlich an einem zweiten Ventilsitz dichtend anliegen und einen dritten Anschluss von einem vierten Anschluss des Druckbefüllventils trennen. Dabei kann der dritte Anschluss mit der Entlüftungsleitung des Öltanks in Verbindung stehen und vom vierten Anschluss des Druckbefüllventils kann eine Entlüftungsleitung abzweigen, die eine Verbindung mit einem Drainmast herstellt.

Im Bereich des Drainmast, der vorzugsweise nahe einer Außenseite der Triebwerksgondel angeordnet ist, münden Leitungen, die jeweils Verbindungen zwischen verschiedenen Bereichen im Inneren des Gasturbinentriebwerkes und dem Drainmast herstellen und aus den nach Auftreten unerwünschter Ereignisse im Gasturbinentriebwerk Leckageöl austritt. Solche Ereignisse können beispielsweise plötzliche Ölundichtigkeiten von Triebwerkskomponenten oder Triebwerksbereichen oder aber auch eine Überbefüllung des Öltanks sein. Anhand von aus den Leitungen austretendem Leckageöl kann im Bereich des Drainmast von einer Bedienperson mittels einer Sichtkontrolle mit geringem Aufwand eine Funktionsprüfung des Gasturbinentriebwerkes durchgeführt werden.

Ein fünfter Anschluss des Druckbefüllventils kann über eine Befüllleitung mit der Ölentnahmeleitung verbunden sein und bei geöffnetem ersten Ventilsitz mit dem ersten Anschluss und mit dem zweiten Anschluss in Verbindung stehen.

Der Öltank ist somit mit geringem Steuer- und Regelaufwand entweder automatisiert von der Remote-Befülleinheit oder manuell von der manuellen Druck-Befülleinheit befüllbar.

Die Ventilsitze und der Ventilkolben können dazu eingerichtet sein, dass der Ventilkolben bei geöffnetem ersten Ventilsitz auch den zweiten Ventilsitz freigibt. Dadurch wird erreicht, dass während einer Befüllung des Öltanks der Innenraum des Öltanks über das Druckbefüllventil im erforderlichen Umfang entlüftet und ein Überdruck im Öltank während der Befüllung vermieden wird.

Wenn der Ventilkolben den dritten Anschluss und den vierten Anschluss permanent vom ersten Anschluss, vom zweiten Anschluss und vom fünften Anschluss trennt, wird ein Ölverlust während einer Befüllung des Öltanks in Richtung des Drainmast auf einfache Art und Weise vermieden.

Eine Befüllschnittstelle der manuellen Druck-Befülleinheit kann im Bereich einer Außenseite einer Triebwerksgondel und in Einbaulage vorzugsweise in einem unteren Bereich der Triebwerksgondel angeordnet sein. Dann ist die Befüllschnittstelle der manuellen Druck-Befülleinheit selbst bei größeren Flugzeugen auf einfache Art und Weise für Bedienpersonen zugänglich.

Die Befüllschnittstelle der manuellen Druck-Befülleinheit kann durch eine Öffnung in der Außenseite der Triebwerksgondel mit einer Öldruckquelle in Verbindung bringbar sein. Zudem kann es vorgesehen sein, dass die Öffnung über eine Abdeckklappe dichtend verschließbar ist und eine Außenseite der Abdeckklappe in einem die Ausnehmung verschließenden Betriebszustand aerodynamisch günstig mit der Öffnung der Triebwerksgondel abschließt.

Die manuelle Druck-Befülleinheit kann eine visuelle Ölstandsanzeige bzw. eine Art Ölschauglas aufweisen, die den Ölstand im Öltank vorzugsweise über eine Glasfaser-Optik anzeigt. Dann kann eine Bedienperson den Befüllvorgang auf einfache Art und Weise direkt verfolgen und eine Überbefüllung des Öltanks vermeiden.

Eine Öffnung der Entlüftungsleitung im Inneren des Öltanks kann in Einbaulage des Öltanks und während Fluglagen eines mit dem Gasturbinentriebwerks ausgeführten Flugzeuges, während den das Flugzeug gegenüber einer Horizontalfluglage um eine Längsachse einen Rollwinkel von +/-40° und um eine Querachse einen Nickwinkel von +/-40° ausführt, um einen definierten Offsetwert oberhalb eines definierten maximalen Ölstandes im Öltank angeordnet sein.

Dadurch wird auf einfache Art und Weise über den gesamten Betriebszustand des Gasturbinentriebwerks gemäß der vorliegenden Offenbarung ein Ölaustritt aus dem Öltank vermieden, solange im Öltank lediglich ein Ölvolumen vorhanden ist, dass das maximale Ölvolumen nicht übersteigt. Dadurch wird ein Ölverbrauch bzw. ein Ölverlust des Ölsystems auf einfache Art und Weise minimiert.

Der Öltank kann über ein T-Stück mit einer manuellen Befülleinheit in Wirkverbindung bringbar sein, von der ausgehend Öl manuell und schwerkraftgetrieben in den Öltank einleitbar ist.

Mit anderen Worten kann der Öltank über eine solche manuelle Befülleinheit ohne zusätzliche Hilfsmittel, wie eine Ölpumpe und dergleichen, lediglich durch Eingießen von Öl aus einem Ölbehältnis in die manuelle Befülleinheit befüllt werden.

Wenn die manuelle Befülleinheit einen Einfüllstutzen und ein zwischen einer Einfüllöffnung und einem Innenraum der manuellen Befülleinheit angeordnetes Klappenventil aufweist, ist das Ölsystem selbst bei nicht verschlossener Einfüllöffnung der manuellen Befülleinheit durch das Klappenventil außerhalb von Befüllvorgängen abgeschlossen. Damit wird ein unerwünschter Ölaustritt über die Befüllöffnung auf konstruktiv einfache Art und Weise verhindert.

Wenn das Druckbefüllventil mit einer Entlüftungsleitung der manuellen Befülleinheit in Verbindung steht, ist ein unerwünschter Druckanstieg im Inneren der manuellen Befülleinheit während eines Befüllvorganges des Öltanks auf einfache Art und Weise vermieden.

Weiterhin besteht die Möglichkeit, dass die manuelle Befülleinheit eine Sensoreinrichtung umfasst, die zur Ermittlung des Ölstands im Öltank dient und vorzugsweise als induktiv, kapazitiv oder magnetisch messende Sensoreinrichtung ausgeführt ist.

Dies bietet wiederum die Möglichkeit, einen automatischen Befüllvorgang des Öltanks ausgehend von der Remote-Befülleinheit ohne visuelle Überwachung durch eine Bedienperson ausgehend vom Cockpit des Flugzeuges zu überwachen und eine Überbefüllung des Öltanks zu vermeiden.

Darüber hinaus besteht auch die Möglichkeit, dass die manuelle Befülleinheit eine Sichteinrichtung mit einem transparenten Element aufweist, über das ein Ölstand im Öltank visuell direkt ermittelbar ist. Dies ermöglicht einer Bedienperson den Füllvorgang, beispielsweise über ein Ölschauglas, zu überwachen und eine Überbefüllung des Öltanks zu vermeiden.

Die Erfindung ist nicht auf die angegebenen Kombinationen der Merkmale der unabhängigen Ansprüche oder der hiervon abhängigen Ansprüche beschränkt. Es ergeben sich im Rahmen der Ansprüche darüber hinaus Möglichkeiten, einzelne Merkmale, soweit sie aus den Ansprüchen, der nachfolgenden Beschreibung von Ausführungsformen oder unmittelbar aus der Zeichnung hervorgehen, miteinander zu kombinieren. Die Bezugnahme der Ansprüche auf die Zeichnungen durch die Verwendung von Bezugszeichen soll den Schutzumfang der Ansprüche nicht beschränken.

Bevorzugte Weiterbildungen des offenbarten Gegenstandes ergeben sich aus den Unteransprüchen und der nachfolgenden Beschreibung. Ausführungsbeispiele der Erfindung werden ohne hierauf beschränkt zu sein, anhand der Zeichnung näher erläutert.

Es zeigt:
- Fig. 1: eine Teilansicht eines Zwischengehäuses eines Gasturbinentriebwerks und eines Ölsystems des Gasturbinentriebwerks;
- Fig. 2: eine weitere Ansicht des Zwischengehäuses und des Systems des Gasturbinentriebwerks gemäß Fig. 1;
- Fig. 3: eine weitere Ansicht des Ölsystems sowie des Zwischengehäuses, wobei das Zwischengehäuse durchscheinend dargestellt ist;
- Fig. 4: eine Längsschnittansicht eines vorderen Bereiches des Gasturbinentriebwerks gemäß Fig. 1 sowie eines Teilbereiches des Ölsystems;
- Fig. 5: ein Schaltschema des Ölsystems des Gasturbinentriebwerks gemäß Fig. 1;
- Fig. 6: eine dreidimensionale Teildarstellung des Ölsystems des Gasturbinentriebwerks gemäß Fig. 1;
- Fig. 7: eine Fig. 6 entsprechende Darstellung des Ölsystems aus einer in Fig. 6 näher gekennzeichneten Ansicht VII;
- Fig. 8: eine stark vereinfachte Einzeldarstellung des Zwischengehäuses des Gasturbinentriebwerks gemäß Fig. 1 in einer Ansicht von hinten;
- Fig. 9: eine Teilansicht eines vorderen Bereiches des Gasturbinentriebwerks gemäß Fig. 1, in dem Leitungen einen Öltank des Ölsystems in axialer Richtung des Gasturbinentriebwerks durchdringen;
- Fig. 10a: eine Schnittansicht des Öltanks gemäß Fig. 9 während einer Horizontalfluglage eines mit dem Gasturbinentriebwerk ausgeführten Flugzeuges;
- Fig. 10b: eine Fig. 10a entsprechende Darstellung des Öltanks während eines Steigflugs, während dem das Flugzeug um eine Querachse nach oben verkippt ist;
- Fig. 10c: eine Fig. 10a entsprechende Darstellung des Öltanks während eines Sinkflugs, während dem eine Vorderseite des Flugzeuges um die Querachse des Flugzeuges nach unten verkippt ist;
- Fig. 11a: eine Querschnittansicht des Öltanks während eines Horizontalflugbetriebes;
- Fig. 11b: eine Fig. 11a entsprechende Darstellung des Öltanks während eines Flugbetriebszustandes, während dem das Flugzeug um eine Längsachse des Flugzeuges gegen den Uhrzeigersinn verkippt ist;
- Fig. 11c: eine Fig. 11a entsprechende Darstellung des Öltanks während eines Flugbetriebszustandes, während dem das Flugzeug um seine Längsachse im Uhrzeigersinn gegenüber der Horizontalfluglage verkippt ist;
- Fig.12a: eine Seitenansicht einer manuellen Befülleinheit, über die der Öltank schwerkraftgetrieben mit Öl befüllbar ist und in deren Bereich ein Ölstand im Öltank sensorisch bestimmbar und auch visuell durch eine Bedienperson ermittelbar ist;
- Fig. 12b: eine Schnittansicht der manuellen Befülleinheit gemäß Fig. 12a;
- Fig. 13: eine vergrößerte Ansicht eines in Fig. 6 näher gekennzeichneten Bereiches XIII des Ölsystems, in dem ein Druckbefüllventil angeordnet ist;
- Fig. 14: eine Schnittansicht des Druckbefüllventils gemäß Fig. 13;
- Fig. 15: eine vergrößerte Ansicht eines in Fig. 4 näher gekennzeichneten Bereiches XV, in dem ein so genannter Drainmast sowie eine manuelle Druck-Befülleinheit angeordnet sind;
- Fig. 16: eine dreidimensionale Einzeldarstellung des Drainmast und der manuellen Druck-Befülleinheit aus einer Ansicht von schräg unten; und.
- Fig. 17: der Bereich XV aus einer in Fig. 15 näher gekennzeichneten Ansicht XVII.

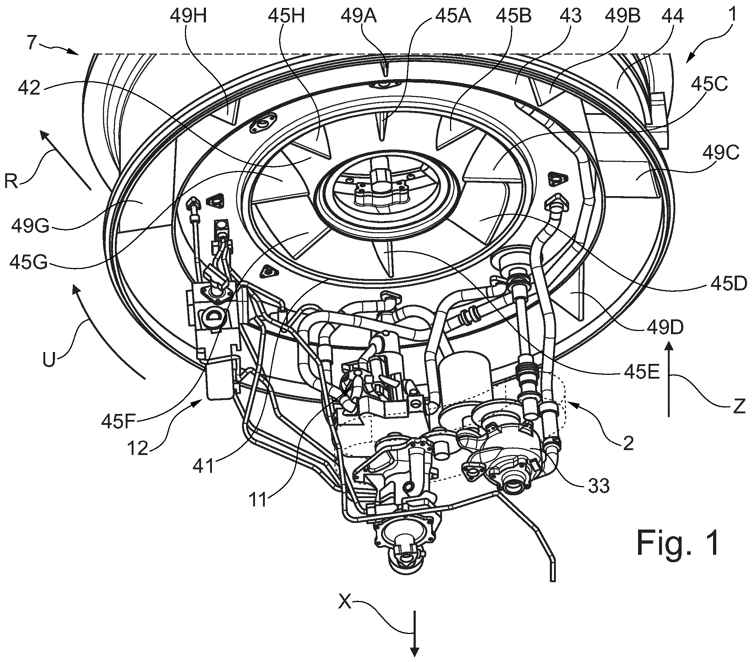

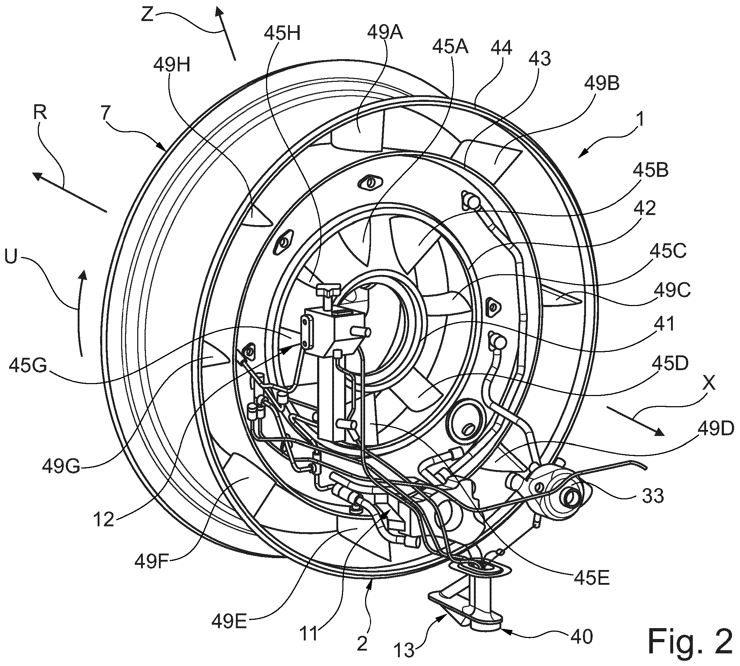

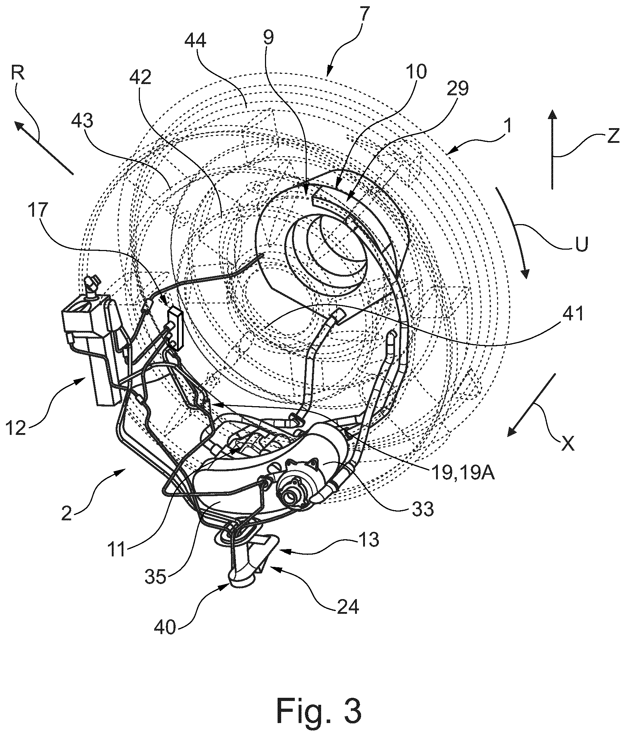

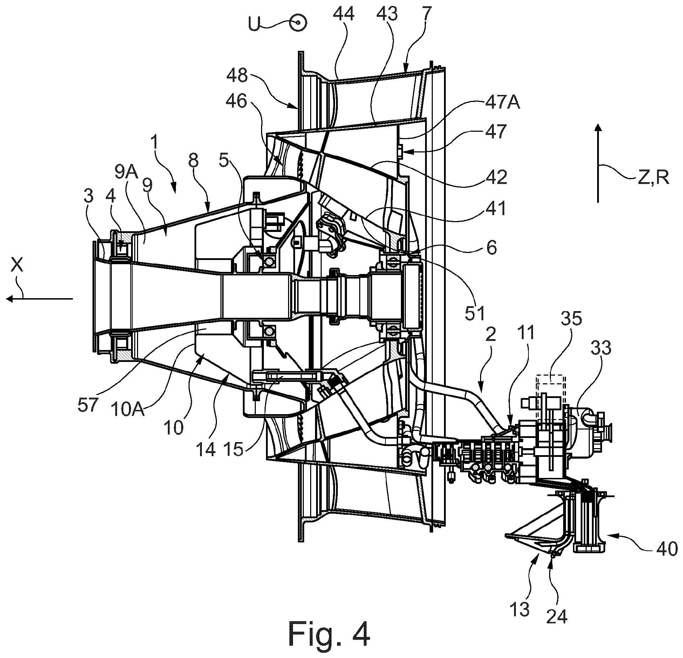

In Fig. 1 bis Fig. 3 sind jeweils verschiedene Ansichten eines Teils eines Gasturbinentriebwerks 1 in dreidimensionaler Ansicht gezeigt. Das Gasturbinentriebwerk 1 ist ein Flugtriebwerk, das mit einem Ölsystem 2 ausgeführt ist. Eine in Fig. 4 näher gezeigte Welle 3 des Gasturbinentriebwerks 1 ist über Lagereinheiten 4 bis 6 gehäuseseitig drehbar gelagert. Dabei begrenzen ein Zwischengehäuse 7 und ein vorderer Gehäusebereich 8 eine Lagerkammer 9, in der ein Öltank 10 des Ölsystems 2 angeordnet ist.

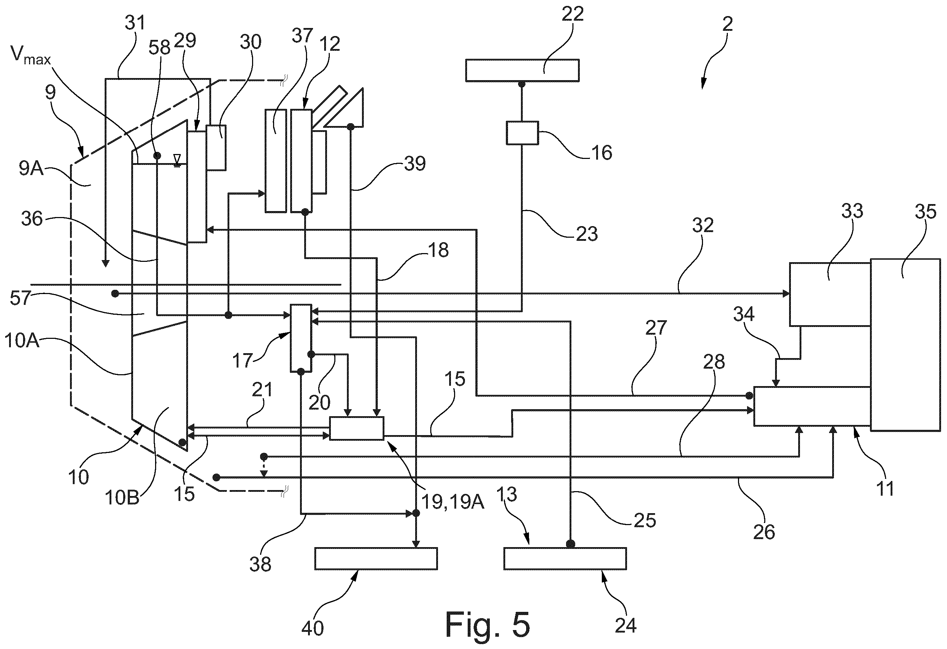

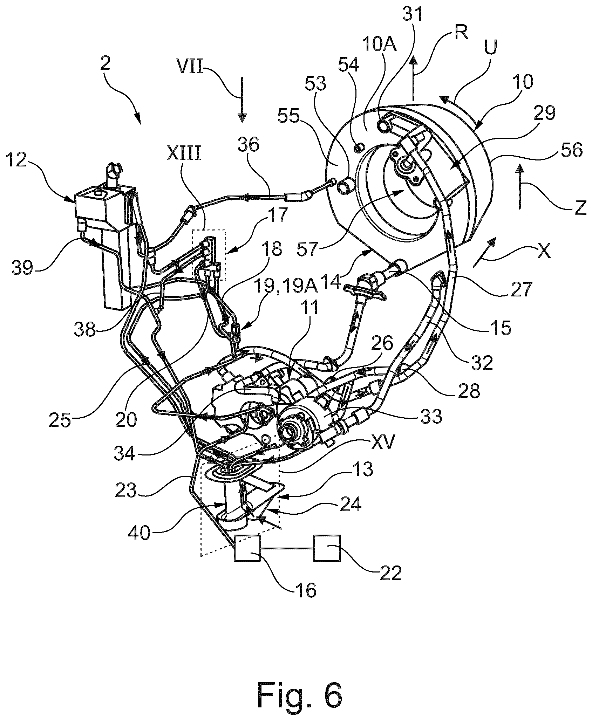

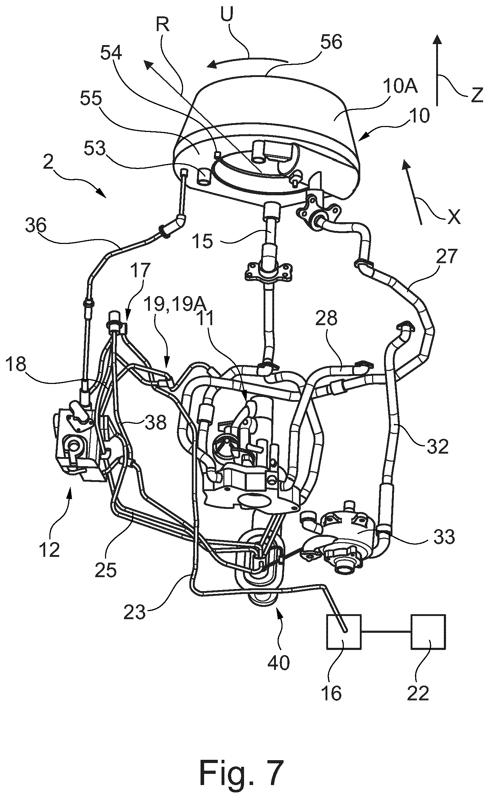

In Fig. 5 ist ein Schaltschema des Ölsystems 2 dargestellt, dem die Verschaltung des Öltanks 10 mit einer Förderpumpe 11, einer manuellen Befülleinheit 12 und einer manuellen Druck-Befülleinheit 13 entnehmbar ist. Zusätzlich zeigen Fig. 6 und Fig. 7 Teile des Ölsystems 2 jeweils in verschiedenen dreidimensionalen Ansichten.

Von einem in Einbaulage des Öltanks 10 in Hochrichtung Z unteren Bereich 14 eines Gehäuses 10A des Öltanks 10 zweigt eine Ölentnahmeleitung 15 ab und verzweigt zur Saugseite der Förderpumpe 11, die im Betrieb des Gasturbinentriebwerks 1 Öl über die Ölentnahmeleitung 15 aus dem Öltank 10 absaugt. Die manuelle Druck-Befülleinheit 13 sowie eine Remote-Befülleinheit 16 sind über ein Druckbefüllventil 17 in der später näher beschriebenen Art und Weise mit dem Inneren des Öltanks 10 verbindbar, um Öl in den Öltank 10 einleiten zu können.

Die manuelle Befülleinheit 12 steht über eine Befüllleitung 18 und ein sogenanntes T-Stück 19 mit der Ölentnahmeleitung 15 in Verbindung, die im Betrieb des Ölsystems 2 zwischen der Förderpumpe 11 und dem Öltank 10 eine Saugleitung darstellt. Der Abschnitt der Ölentnahmeleitung 15, der vom T-Stück 19 zum Öltank 10 führt, verbindet die manuelle Befülleinheit 12 mit dem Inneren des Öltanks 10, womit dieser Abschnitt der Ölentnahmeleitung 15 zum Befüllen des Öltanks 10 mit Öl verwendet wird und betriebszustandsabhängig entweder einen Saugleitungsabschnitt oder einen Befüllleitungsabschnitt darstellt. Zusätzlich ist das T-Stück 19 auch mit dem Abschnitt der Ölentnahmeleitung 15 verbunden, der zwischen der Förderpumpe 11 und dem T-Stück 19 verläuft. Dabei ist das T-Stück 19 zwischen dem unteren Bereich 14 des Gehäuses 10A des Öltanks 10 und der Saugseite der Förderpumpe 11 in der Ölentnahmeleitung 15 angeordnet. Eine weitere Befüllleitung 20 verläuft zwischen dem Druckbefüllventil 17 und einem weiteren T-Stück 19A. Über die weitere Befüllleitung 20 wird das Öl von der Remote-Befülleinheit 16 oder von der manuellen Druck-Befülleinheit 13 durch das Druckbefüllventil 17 in Richtung des weiteren T-Stücks 19A geführt. Im Bereich des weiteren T-Stücks 19A wird das Öl in die Ölentnahmeleitung 15 eingeleitet und anschließend durch den Befüllleitungsabschnitt der Ölentnahmeleitung 15 in das Innere des Öltanks 10 geführt.

In Abhängigkeit des jeweils vorliegenden Anwendungsfalles besteht auch die Möglichkeit, dass das Öl zum Befüllen des Öltanks über eine stromab der T-Stücke 19 und 19A verlaufende zusätzliche Befüllleitung 21 in das Innere des Öltanks 10 eingeleitet wird.

Wenn der Öltank 10 ausgehend von der Remote-Befülleinheit 16 automatisch mit Öl befüllt wird, fördert eine im Flugzeug vorhandene Förderpumpe der Remote-Befülleinheit 16 Öl aus einem weiteren Öltank 22, der ebenfalls im Flugzeug angeordnet ist, das mit dem Gasturbinentriebwerk 1 ausgeführt ist. Dabei wird das Öl aus dem weiteren Öltank 22 über eine weitere Befüllleitung 23 in Richtung des Druckbefüllventils 17 gefördert und von dort über die weitere Befüllleitung 20 in Richtung des weiteren T-Stücks 19A und von dort in Richtung des Öltanks 10 geleitet.

Wird der Öltank 10 während eines Parkbetriebszustandes des Flugzeuges mit geringem Aufwand ausgehend von der manuellen Druck-Befülleinheit 13 mit Öl befüllt, leitet eine Bedienperson mittels einer manuell oder einer elektrisch betreibbaren Ölpumpe Öl über eine Befüllschnittstelle 24 der manuellen Druck-Befülleinheit 13 in eine zusätzliche Befüllleitung 25 des Ölsystems 2 ein. Durch die zusätzliche Befüllleitung 25 wird das Öl in Richtung des Druckbefüllventils 17 geführt. Im Bereich des Druckbefüllventils 17 wird das von der manuellen Druck-Befülleinheit 13 unter Druck zugeführte Öl in Richtung der weiteren Befüllleitung 20 weitergeleitet und im Bereich des weiteren T-Stücks 19A in Richtung des Öltanks 10 geführt.

Zusätzlich besteht die Möglichkeit, den Öltank 10 ausgehend von der manuellen Befülleinheit 12 im Wesentlichen drucklos mit Öl zu befüllen. Hierfür wird Öl aus einem Ölbehältnis in die manuelle Befülleinheit 12 eingefüllt. Das Öl fließt aufgrund der angreifenden Schwerkraft durch die Befüllleitung 18 in Richtung des in Hochrichtung Z tiefer angeordneten T-Stücks 19, von wo aus das Öl schwerkraftgetrieben durch die Ölentnahmeleitung 15 in den Öltank 10 eintritt.

Das im Betrieb des Gasturbinentriebwerks 1 von der Förderpumpe 11 aus dem Öltank 10 entnommene Öl, das unter anderem zur Schmierung und Kühlung der Lagereinheiten 4 bis 6 verwendet wird, wird von der Förderpumpe 11 über eine Rückführleitung 26 aus der Lagerkammer 9 abgesaugt. Zudem saugt die Förderpumpe 11 über eine weitere Rückführleitung 28 auch Öl aus anderen Bereichen des Gasturbinentriebwerks 1 an und fördert das Rücklauföl über eine kombinierte Rückführleitung 27 in Richtung des Öltanks 10.

Die kombinierte Rückführleitung 27 mündet in einen Ölabscheider 29, der am Gehäuse 10A des Öltanks 10 montiert ist. Im Bereich des Ölabscheiders 29 wird Luft vom Öl getrennt, die mit dem rückgeführten Öl in den Ölabscheider 29 eintritt. Das Öl wird aus dem Ölabscheider 29 in das Innere des Öltanks 10 eingeleitet, während die abgetrennte Luft über ein Druckbegrenzungsventil 30 in das Innere der Lagerkammer 9 über eine Entlüftungsleitung 31 ausgeleitet wird. Über das Druckbegrenzungsventil 30 wird gewährleistet, dass ein Druck im Inneren des Öltanks 10 nicht unter ein definiertes Druckniveau absinkt, oberhalb dem Kavitation im Bereich der Förderpumpe 10 unterbleibt.

Die Lagerkammer 9 steht über eine weitere Entlüftungsleitung 32 und einem Entlüfter 33 bzw. einem sogenannten Breather in Verbindung, in dessen Bereich der Ölanteil der Luft, die aus der Lagerkammer 9 ausgeführt wird, weiter reduziert wird. Anschließend wird die Luft aus dem Entlüfter 33 an eine Umgebung des Gasturbinentriebwerks 1 ausgeleitet. Der Entlüfter 33 steht über eine zusätzliche Rückführleitung 34 mit der Förderpumpe 11 in Verbindung, über die das im Bereich des Entlüfters 33 abgetrennte Öl von der Förderpumpe 11 durch die kombinierte Rückführleitung 27 wieder in den Ölabscheider 29 eingeleitet wird.

Sowohl der Entlüfter 33 als auch die Förderpumpe 11 werden vorliegend über ein Hilfsgerätegetriebe 35 bzw. ein Nebenaggregategetriebe angetrieben. Das Hilfsaggregategetriebe 35 ist speziell dafür ausgelegt, Hilfseinrichtungen und Zubehörteile des Gasturbinentriebwerks 1 anzutreiben. Solche Hilfseinrichtungen und Zubehörteile sind beispielsweise elektrische Generatoren, Hydraulikpumpen und andere Systeme, die für den Betrieb des Gasturbinentriebwerks 1 erforderlich sind.

Zusätzlich steht der Öltank 10 über eine Entlüftungsleitung 36 mit dem Druckbefüllventil 17 und einer Sensoreinrichtung 37 der manuellen Befülleinheit 12 in Verbindung, um während eines Befüllvorganges des Öltanks 10 einen unzulässigen Druckanstieg im Ölsystem 2 zu vermeiden.

Weiterhin steht das Druckbefüllventil 17 über eine Leckageleitung 38 und die manuelle Befülleinheit 12 über eine weitere Leckageleitung 39 mit einem Drainmast 40 in Verbindung. Mittels des Drainmast 40 können Bedienpersonen visuell Undichtigkeiten im Bereich des Druckbefüllventils 17 und der manuellen Befülleinheit 12 sowie eine Überbefüllung des Öltanks 10 auf einfache Art und Weise feststellen, wenn im Bereich des Drainmast 40 beispielsweise aus den Leckageleitungen 38 und 39 Öl austritt.

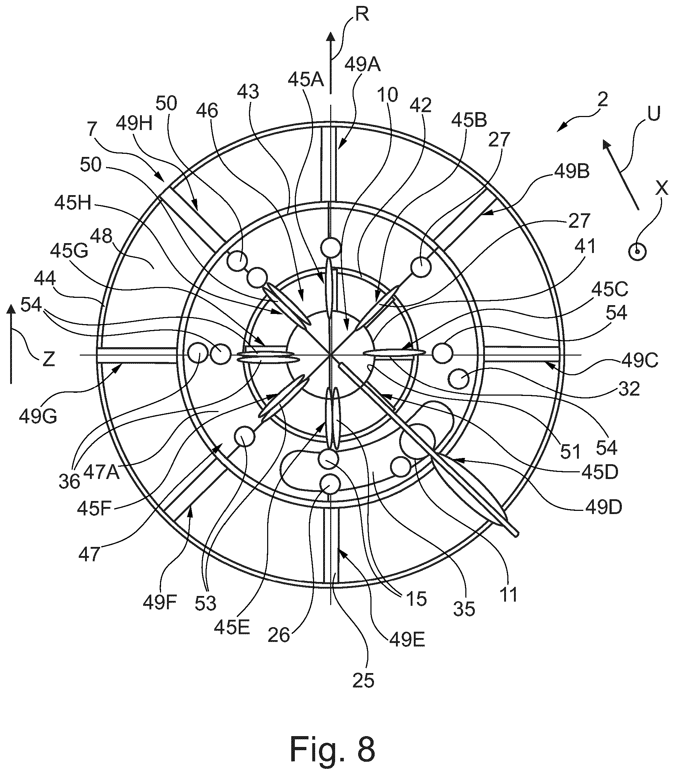

Fig. 8 zeigt eine Rückansicht des Zwischengehäuses 7, das mehrere konzentrisch zueinander angeordnete und im Querschnitt wenigstens annähernd kreisringförmig ausgeführte Bauteilbereiche 41 bis 44 umfasst. Dabei begrenzen die Bauteilbereiche 41 und 42, die über radial verlaufende Kernstreben 45A bis 45H miteinander verbunden sind, einen Einlaufbereich 46 eines Kernluftstromes des Gasturbinentriebwerks 1 sowohl in radialer Richtung R als auch in Umfangsrichtung U. Darüber hinaus begrenzen die Bauteile 42 und 43 in radialer Richtung R und in Umfangsrichtung U einen sogenannten Drehmomentkasten 47, der zwischen dem Einlaufbereich 46 des Kernluftstroms und einem Einlaufbereich 48 eines Nebenluftstromes durch einen nicht näher dargestellten Nebenstromkanal des Gasturbinentriebwerks 1 angeordnet ist. Der Einlaufbereich 48 des Nebenluftstromes wird von den Bauteilen 43 und 44 in radialer Richtung R und in Umfangsrichtung U begrenzt, die über sogenannte Nebenstromstreben 49A bis 49H fest miteinander verbunden sind. Die die manuelle Druck-Befülleinheit 13 und das Druckbefüllventil 17 verbindende Befüllleitung 25 verläuft durch die Nebenstromstrebe 49E.

Radial innerhalb des Einlaufbereiches 46 des Kernluftstromes ist der Öltank 10 im Innenraum 9A der Lagerkammer 9 angeordnet. Die kombinierte Rückführleitung 27 verläuft ausgehend von der Förderpumpe 11 aus dem Drehmomentkasten 47 durch die Kernstrebe 45B radial nach innen in Richtung des Ölabscheiders 29. Des Weiteren verläuft eine Sperrluft führende Leitung 54 aus dem Drehmomentkasten 47 und durch das Innere der Kernstrebe 45C und 45G radial nach innen in Richtung der Lagerkammer 9, die radial innerhalb des kreisringförmigen Bauteils 41 des Zwischengehäuses 7 angeordnet ist.

Die Ölentnahmeleitung 15 verläuft vom Öltank 10 durch das Innere der Kernstrebe 45E in radialer Richtung R nach außen in den Drehmomentkasten 47 hinein und durchdringt anschließend in axialer Richtung X des Gasturbinentriebwerks 1 eine Rückwand 47A des Drehmomentkastens 47. Außerhalb des Drehmomentkastens 47 steht die Ölentnahmeleitung 15 mit der Förderpumpe 11 des Ölsystems 2 in Verbindung. Darüber hinaus verläuft die Rückführleitung 26 ebenfalls durch die Kernstrebe 45E radial nach außen in den Drehmomentkasten 47, durchdringt anschließend die Rückwand 47A und verläuft dann in Richtung der Förderpumpe 11.

Eine ölführende Leitung 53 verläuft von der Förderpumpe 11 in axialer Richtung X durch die Rückwand 47A in den Drehmomentkasten 47 hinein und von dort durch die Kernstrebe 45F in Richtung der Lagerkammer 9. Über die Leitung 53 werden die Lagereinheiten 5 und 6 ausgehend von der Förderpumpe 11 mit Öl beaufschlagt.

Durch die Kernstrebe 45G verläuft in radialer Richtung R nach innen zwischen dem Drehmomentkasten 47 und der Lagerkammer 9 eine Sperrluft führende Leitung 54, über die Lagereinheiten 4 bis 6 mit Luft beaufschlagt werden. Zusätzlich verläuft durch die Kernstrebe 45G die Entlüftungsleitung 36 des Öltanks 10 in radialer Richtung R nach außen durch den Einlaufbereich 46 des Kernluftstromes in das Innere des Drehmomentkastens 47 und durchdringt anschließend die Rückwand 47A in axialer Richtung X und verläuft von dort weiter in Richtung des Druckbefüllventils 17. Durch die Rückwand 47A und das Innere der Kernstrebe 45H verläuft eine weitere Öl führende Leitung 50 von der Förderpumpe 11 in Richtung der Lagereinheit 4, um dieses in gewünschtem Umfang mit Öl beaufschlagt zu können.

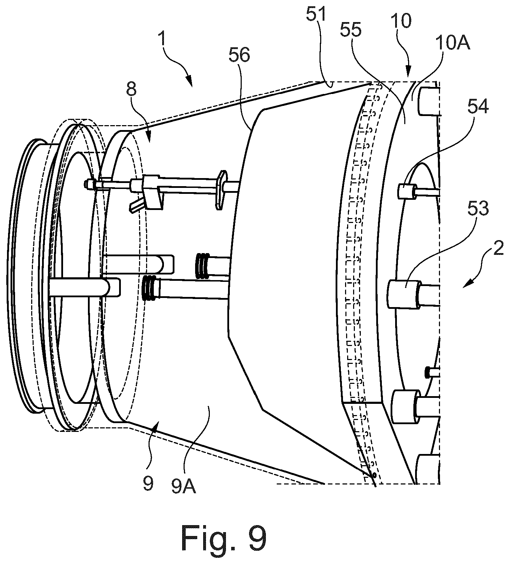

Da der Öltank 10 umfangsseitig bzw. in radialer Richtung R im Wesentlichen spaltfrei an einer Innenseite 51 des radial inneren kreisringförmigen Bauteils 41 anliegt bzw. angrenzt, verlaufen die Leitungen 53 und 54 in der in Fig. 9 näher dargestellten Art und Weise in axialer Richtung X durch das Gehäuse 10A. Dabei durchdringen die Leitungen 53 und 54 in axialer Richtung X einer erste Seitenwand 55 des Gehäuses 10A, den Innenraum 10B des Öltanks 10 und danach eine zweite Seitenwand 56 des Gehäuses 10A.

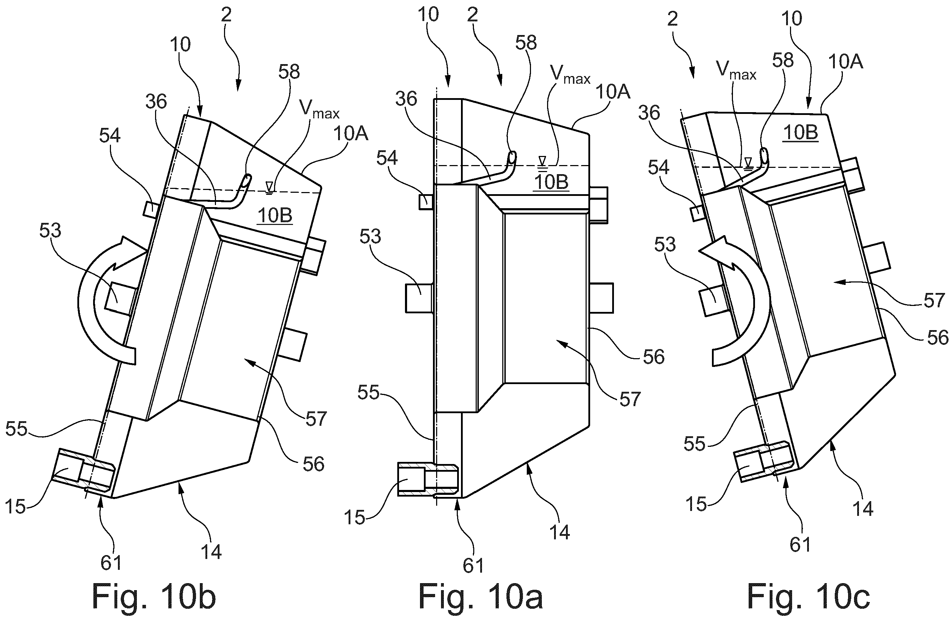

Fig. 10a zeigt eine Längsschnittansicht des Gehäuses 10A des Öltanks 10 während eines Horizontalflugbetriebes. Aus der Darstellung gemäß Fig. 10a geht hervor, dass das Gehäuse 10A in radialer Richtung R eine mittige kreisförmige Aussparung 57 begrenzt, die die Welle 3 in der in Fig. 4 näher dargestellten Art und Weise in axialer Richtung X durchgreift. In dem in radialer Richtung R oberhalb der kreisförmigen Aussparung 57 angeordneten Bereich des Innenraums 10B des Öltanks 10 ist eine Öffnung 58 der Entlüftungsleitung 36 des Öltanks 10 angeordnet. Die Öffnung 58 der Entlüftungsleitung 36 liegt im Innenraum 10B des Öltanks 10 in definierter Weise oberhalb eines maximalen Ölstandes Vmax.

Fig. 10b zeigt eine Fig. 10a entsprechende Darstellung des Öltanks 10 während eines Steigflugs eines mit dem Gasturbinentriebwerk 1 ausgeführten Flugzeuges, während dem das Flugzeug gegenüber der Horizontalfluglage um eine Querachse einen Nickwinkel von etwa +40° ausführt. Durch die definierte Positionierung der Öffnung 58 im Öltank 10 ist die Öffnung 58 während des Steigflugs nach wie vor knapp oberhalb des maximalen Ölstandes Vmax im Öltank angeordnet.

Im Unterschied dazu zeigt Fig. 10c eine Fig. 10a entsprechende Darstellung des Öltanks 10 während eines Sinkflugs, während dem das Flugzeug um seine Querachse einen Nickwinkel von -40° ausführt. Die Öffnung 58 der Entlüftungsleitung 36 liegt auch während des Sinkflugs über dem maximalen Ölstand Vmax im Öltank 10.

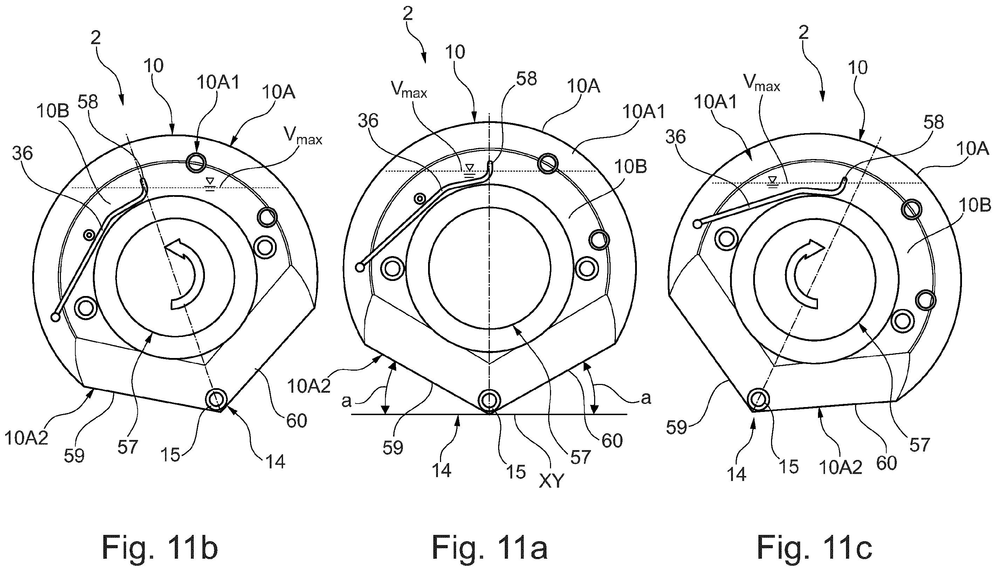

Zudem ist die Öffnung 58 der Entlüftungsleitung 36 derart im Öltank 10 angeordnet, dass die Öffnung 58 während Fluglagen des Gasturbinentriebwerks 1, während den das Flugzeug gegenüber einer in Fig. 11a dargestellten Horizontalfluglage um eine Längsachse einen Rollwinkel von +/-40° ausführt, dauerhaft oberhalb des maximalen Rückstandes Vmax im Öltank 10 angeordnet ist. Die von der Horizontalfluglage abweichenden Schwenkstellungen des Öltanks zeigen jeweils die Figuren 11b und 11c.

Damit wird über den gesamten Betriebsbereich des Flugzeuges gewährleistet, dass über die Entlüftungsleitung kein Öl aus dem Öltank 10 austritt, solange dieser keinen überbefüllten Zustand aufweist.

Zur Minimierung des aus dem Öltank 10 über die Entnahmeleitung 15 konstruktionsbeding nicht entnehmbaren Ölvolumens ist der in Einbaulage des Öltanks 10 obere Bereich 10A1 des Gehäuses 10A des Öltanks 10 kreisringförmig ausgebildet. Ein sich daran in Hochrichtung Z und in Umfangsrichtung U anschließender unterer Bereich 10A2 des Gehäuses 10A weist in Umfangsrichtung U des Gehäuses 10A des Öltanks 10 aufeinander zulaufende abgeflachte und das Volumen des Öltanks 10 begrenzende Gehäuseseiten 59, 60 auf. Die Gehäuseseiten 59 und 60 schließen jeweils mit einer Horizontalebene XY einen Winkel α ein, der größer 30° und vorzugsweise kleiner als 45° ist. Zusätzlich verjüngt sich der untere Bereich des Gehäuses 10A des Öltanks 10 ausgehend vom oberen Bereich des Gehäuses 10A in Richtung eines unteren Endes 61 des Gehäuses 10A in axialer Richtung X stetig, so dass das im Öltank 10 befindliche Ölvolumen minimal ist, das durch die Ölentnahmeleitung 15 nicht aus dem Inneren des Öltanks 10 ausleitbar ist.

Das speicherbare Volumen des Öltanks 10 beträgt je nach Anwendungsfall mehr als 15 Liter, vorzugsweise mehr als 20 Liter und kann je nach Anwendungsfall auch mehr als 40 Liter betragen. Insgesamt weist das Volumen des Öltanks 10 ein Ausdehnungsvolumen von ca. 20 % auf.

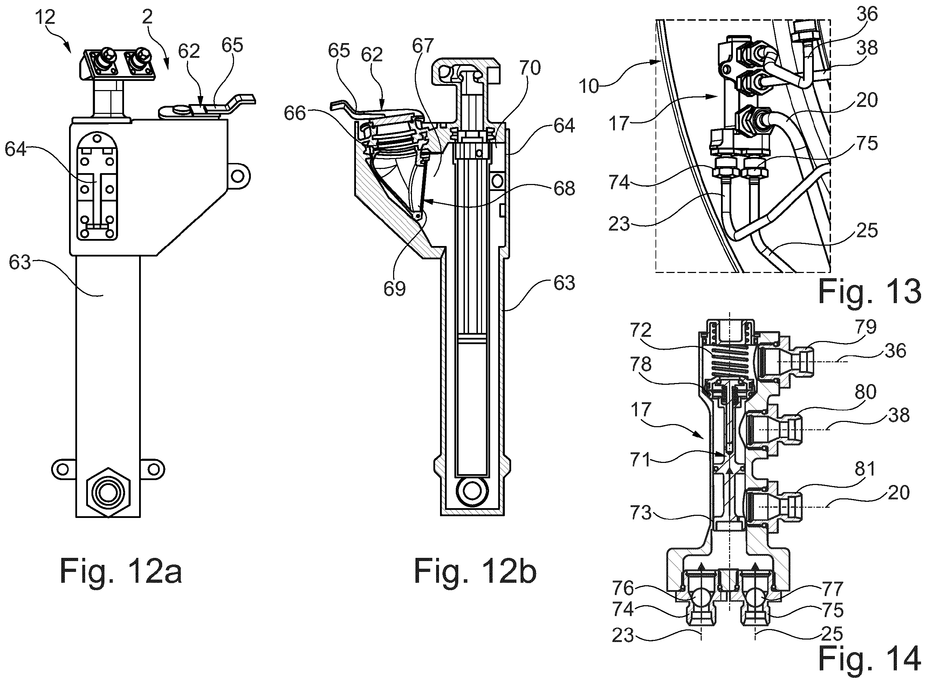

Fig. 12a zeigt eine Seitenansicht der manuellen Befülleinheit 12 in Alleinstellung, während in Fig. 12b eine Schnittansicht der manuellen Befülleinheit 12 dargestellt ist. Ein manueller Öleinfüllstutzen 62 der manuellen Befülleinheit 12 ist in einem Gehäuse 63 der manuellen Befülleinheit 12 in einer Position angebracht, die die manuelle Befüllung des Öltanks 10 und die gleichzeitige Kontrolle des Ölstands im Öltank 10 über ein Ölschauglas 64 ermöglicht. Hierfür ist das Ölschauglas 64 in unmittelbarer Nähe des Öleinfüllstutzens 62 angebracht. Die Position des Öleinfüllstutzens 62 ist in Bezug auf den Ölstand im Öltank 10 für eine typische Bodenlage eines mit dem Gasturbinentriebwerk 1 ausgeführten Flugzeugs ausgelegt. Dadurch wird die Wahrscheinlichkeit eines manuellen Überfüllens des Öltanks 10 durch eine Bedienperson minimiert.

Um eine Bedienperson visuell darauf hinweisen zu können, dass ein Deckel 65 des Öleinfüllstutzens 62 nicht vollständig geschlossen ist, kann die Unterseite des Deckels 65 beispielsweise mit einer Signalfarbe, vorzugsweise in roter Farbe eingefärbt sein. Zudem kann im Bereich zwischen einer Einfüllöffnung 66 und einem Innenraum 67 des Gehäuses 63 ein Klappenventil 68 vorgesehen sein, mittels dem sicherstellt wird, dass kein Öl verloren geht, wenn der Deckel 65 des Öleinfüllstutzens 62 nicht geschlossen ist. Dabei kann eine Prallplatte 69 des Klappenventils 68 so angebracht sein, dass es zu keiner Beeinträchtigung zwischen dem Gehäuse 62 und der Prallplatte 69 kommt.

Weiterhin kann die Prallplatte 69 so positioniert sein, dass die Prallplatte 69 in der Schließstellung mit der Hochrichtung Z einen Winkel von etwa 10° einschließt. Dadurch wird erreicht, dass die Prallplatte 69 aufgrund ihres Eigengewichts an einer Dichtung dichtend anliegt. Um das Einfüllen von Öl in den Innenraum 67 des Gehäuses 63 ungehindert zu ermöglichen, kann die Prallplatte 69 um einen Winkelwert von vorzugsweise 130° gegenüber ihrer Schließstellung verschwenkbar sein.

Ein Hohlraum 70, der hinter dem Ölschauglas 64 angeordnet ist, ist über eine Entlüftungsleitung in Richtung des Drainmast 40 entlüftet, womit sich im Hohlraum keine Luftansammlung bilden kann, die die Ölstandsanzeige beeinflusst.

Die Sensoreinrichtung 37 der manuellen Befülleinheit 12 kann beispielsweise als ein kapazitiver Sensor ausgebildet sein, der aus drei isolierten konzentrischen Röhren besteht, die zwei unterschiedliche Kapazitäten erzeugen. Eine der erzeugten Kapazitäten, die bei einer solchen Ausführungsform der Befülleinheit 12 üblicherweise als Kondensatorkapazität bezeichnet wird, kann von einem externen Gerät verarbeitet werden, um die durch Umweltbedingungen und die Reifung des Öls bedingten Änderungen des Öl-Dielektrikums zu kompensieren. Eine zweite Kapazität, die als Sensorkapazität bezeichnet wird, kann auf der Grundlage eines bekannten dielektrischen Ölwerts, der von der Kompensatorkapazität verarbeitet wird, ein Kapazitätssignal liefern, das direkt vom Ölstand abhängt. Das dieser Messmethode zu Grunde liegende allgemeine Messprinzip beruht dann auf einer Änderung des dielektrischen Werts zwischen der Luft und dem Öl im Bereich zwischen den eingetauchten Röhrenlängen.

Das Gehäuse 63 der manuellen Befülleinheit 12 kann in Abhängigkeit des jeweils vorliegenden Anwendungsfalles im Bereich des Triebwerkskerns des Gasturbinentriebwerks 1 oder auch im Bereich einer Außenseite des Zwischengehäuses 7 montiert werden.

Die Anordnung des Öltanks 10 in der Lagerkammer 9 bietet die Möglichkeit, den Öltank 10 bzw. dessen Gehäuse 10A nicht zwingend feuerfest ausführen zu müssen, da die Lagerkammer 9 keine sicherheitskritische Feuerzone des Gasturbinentriebwerks 1 darstellt. Zusätzlich ist der Öltank 10 durch die Anordnung in der Lagerkammer 9 von den die Lagerkammer 9 umgebenden kreisringförmigen Bauteilen 41 bis 44 des Zwischengehäuses 7 gegenüber mit großer Geschwindigkeit in das Innere des Gasturbinentriebwerks 1 eindringende Bauteile bzw. Projektile geschützt. Dadurch ist die Wahrscheinlichkeit eines Ölverlustes im Vergleich zu bislang bekannten Lösungen kleiner, bei welchen der Öltank im Bereich des Nebenaggregategetriebes 35 und damit außerhalb der Lagerkammer angeordnet ist.

Fig. 13 zeigt eine vergrößerte Ansicht eines in Fig. 6 näher gekennzeichneten Bereiches XIII, der das Druckbefüllventil 17 umfasst. Zudem ist in Fig. 14 eine Schnittansicht des Druckbefüllventils 17 dargestellt. Das Druckbefüllventil 17 weist einen Ventilkolben 71 auf, der in drucklosem Zustand von einem Federelement 72 dichtend an einen ersten Ventilsitz 73 angelegt wird und Verbindungen zwischen der Remote-Befülleinheit 16 und dem Öltank 10 sowie zwischen der manuellen Druck-Befülleinheit 13 und dem Öltank 10 sperrt. Bei Anliegen eines Öffnungsdrucks seitens der Remote-Befülleinheit 16 oder seitens der manuellen Druck-Befülleinheit 13 gibt der Ventilkolben 71 die jeweilige Verbindung frei.

Im Bereich eines ersten Anschlusses 74 des Druckbefüllventils 17, der mit der Remote-Befülleinheit 16 über die weitere Befüllleitung 23 in Verbindung steht, und im Bereich eines zweiten Anschlusses 75, der mit der manuellen Druck-Befülleinheit 13 über die zusätzliche Befüllleitung 25 in Verbindung steht, ist jeweils ein Rückschlagventil 76 bzw. 77 angeordnet. Die Rückschlagventile 76 und 77 geben den jeweils zugeordneten Anschluss 74 bzw. 75 frei, wenn der Druck im Druckbefüllventil 17 kleiner ist als in den Befüllleitungen 23 bzw. 25.

Weiterhin liegt der Ventilkolben 71 in drucklosem Zustand auch an einem zweiten Ventilsitz 78 dichtend an und trennt einen dritten Anschluss 79 von einem vierten Anschluss 80. Dabei steht der dritte Anschluss 79 mit der Entlüftungsleitung 36 des Öltanks 10 in Verbindung, während vom vierten Anschluss 80 des Druckbefüllventils 17 die Leckageleitung 38 abzweigt, die eine Verbindung mit dem Drainmast 40 herstellt, der in einem einer Außenseite 88 einer Triebwerksgondel 86 nahen Bereich innerhalb des Gasturbinentriebwerkes 1 montiert ist.

Ein fünfter Anschluss 81 des Druckbefüllventils 17 steht über die weitere Befüllleitung 20 und das weitere T-Stück 19A mit der Ölentnahmeleitung 15 in Wirkverbindung. Dabei ist der fünfte Anschluss 81 bei geöffnetem ersten Ventilsitz 73 mit den Anschlüssen 74 und 75 verbunden, um Öl von der Remote-Befülleinheit 16 oder von der manuellen Druck-Befülleinheit 13 durch das Druckbefüllventil 17 in Richtung des Öltanks 10 führen zu können. Damit besteht die Möglichkeit, den Öltank 10 remote oder manuell und druckgetrieben über das Druckbefüllventil 17 mit Öl zu befüllen. Zusätzlich sperrt der Ventilkolben 71 den dritten Anschluss 79 und den vierten Anschluss 80 permanent von ersten Anschluss 74, vom zweiten Anschluss 75 und vom fünften Anschluss 81.

Das Druckbefüllventil 17 ist separat vom Gehäuse 63 der manuellen Befülleinheit 12 im Gasturbinentriebwerk 1 installiert und ist in Hochrichtung Z so tief wie möglich im Triebwerkskern positioniert, um die Entleerung des Öltanks 10 im Falle einer Überfüllung zu unterstützen. Um das Eindringen von Schmutzpartikel in das Ölsystem 2 zu verhindern, kann im Bereich des Druckbefüllventils 17 ein entsprechendes Sieb vorgesehen sein.

Wenn sich nach Beendigung des Fernbefüllvorganges des Öltanks 10 noch Öl in der Entlüftungsleitung 36 des Öltanks 10 befindet, wird das Öl bei der nächsten Verwendung des Druckbefüllventils 17 über den vierten Anschluss 80 und die Leckageleitung 38 in Richtung des Drainmast 40 abgelassen.

Wenn der Öltank 10 befüllt wird, wird der steigende Ölstand im Öltank 10 im Bereich der manuellen Befülleinheit 12 sowohl im Bereich des Ölschauglases 64 permanent aktualisiert visuell angezeigt und zudem von der Sensoreinrichtung 37 kapazitiv ermittelt. Die Position der Öffnung 58 der Entlüftungsleitung 36 ist im Öltank 10 derart, dass die Befüllung des Öltanks durch die Remote-Befülleinheit 16 rechtzeitig vor einer Überfüllung des Öltanks 10 aufgrund des Sensorsignals der Sensoreinrichtung 37 abschaltet wird.

Wenn der Ventilkolben 71 den zweiten Ventilsitz freigibt, steht der dritte Anschluss 79 mit dem vierten Anschluss 80 in Verbindung. Dann ist eine Überbefüllung des Öltanks 10 auf einfache Art und Weise dadurch verhindert, dass das gesamte überschüssige Öl im Öltank 10 durch das Druckbefüllventil 17 und den vierten Anschluss 80 in Richtung des Drainmast 40 abfließt und aus dem Ölsystem 2 ausgeleitet wird. Dadurch werden ein Überdruck und daraus resultierende Schäden im Bereich der Förderpumpe 11, des Druckbegrenzungsventils 30 sowie des Öltanks 10 verhindert.

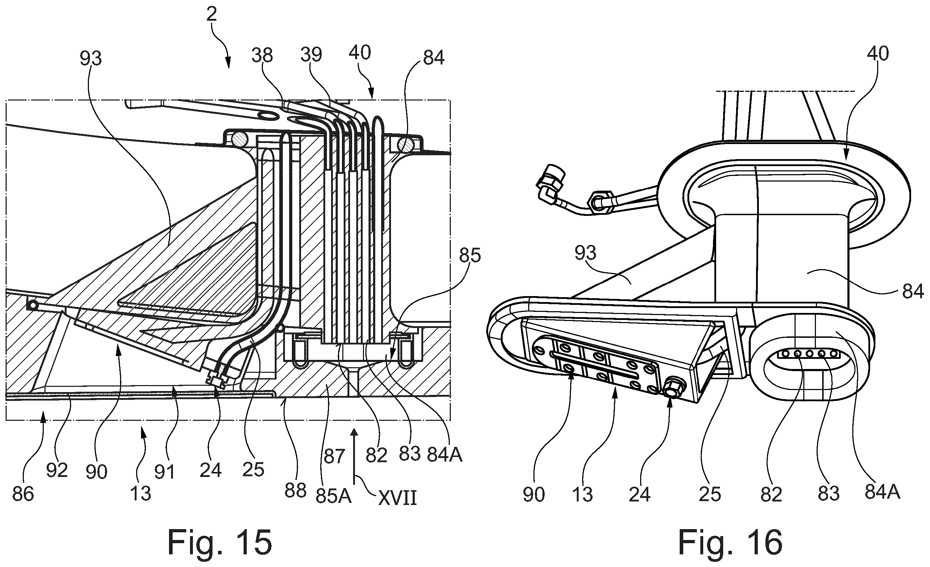

Fig. 15 zeigt eine vergrößerte Ansicht eines in Fig. 4 näher gekennzeichneten Bereiches XV in einer vergrößerten Ansicht. Im Bereich XV sind der Drainmast 40 sowie die manuelle Druck-Befülleinheit 13 angeordnet. In den Drainmast münden unter anderem die Leckageleitungen 38 und 39, deren Öffnungen 82, 83 im Bereich einer Unterseite eines Gehäuses 84 des Drainmast 40 angeordnet und in Fig. 16 dargestellt sind. Die Öffnungen 82, 83 sind von einem vorliegend oval ausgeführten Dichtelement 84A umgeben, das mit einer Innenseite 85 einer Wandung 85A der Triebwerksgondel 86 dichtend in Verbindung steht. Durch die Wandung 85A der Triebwerksgondel 86 verläuft eine Bohrung 87, die in einer Außenseite 88 der Wandung 85A der Triebwerksgondel 86 mündet. Auf diese Art und Weise ist mit geringem Aufwand eine Überbefüllung des Öltanks 10 oder auch der Austritt von Leckageöl aus anderen Bereichen durch eine einfache Sichtkontrolle erkennbar.

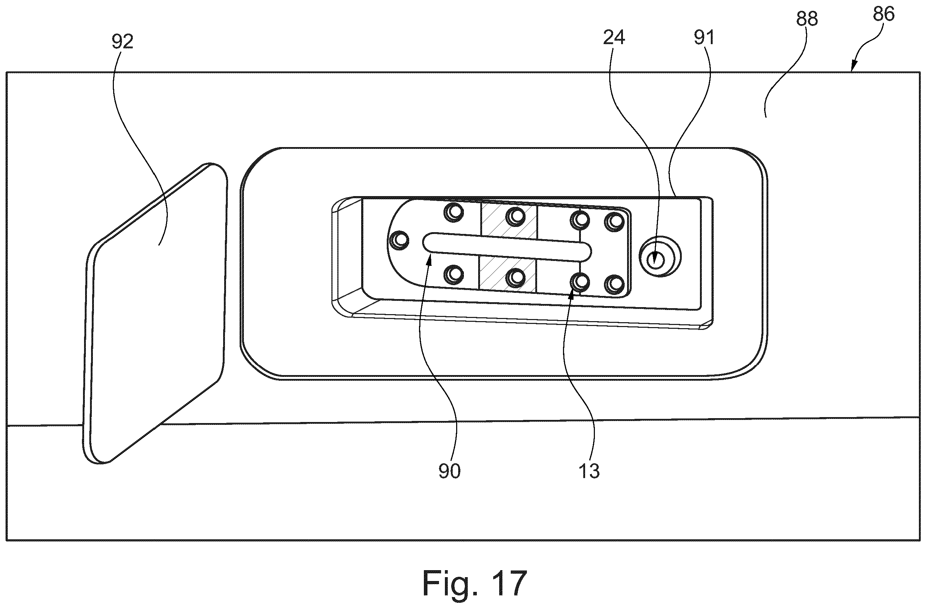

Neben dem Drainmast 40 ist die manuelle Druck-Befülleinheit 13 angeordnet, in deren Bereich die Befüllleitung 25 mit der manuellen Druckbefüllschnittstelle 24 in Verbindung steht. Die manuelle Druck-Befülleinheit 13 umfasst neben der Druck-Befüllschnittstelle 24 eine in Fig. 17 dargestellte Ölstandsanzeige 90, vorzugsweise eine Art Ölschauglas, die über eine entsprechende Glasfaser-Optik den aktuellen Ölstand im Öltank 10 anzeigt.

Für einen einfache Handhabung ist die manuelle Druck-Befülleinheit 13 in einem unteren Bereich des Gasturbinentriebwerks 1 und Bereich der Außenseite 88 der Triebwerksgondel 86 positioniert. Dadurch ist die manuelle Druck-Befülleinheit 13 auf einfache Art und Weise von außen durch eine Öffnung 91 in der Außenseite 88 der Triebwerksgondel 86 bedienbar. Die Öffnung 91 ist durch eine Abdeckklappe 92 verschließbar, die gegenüber der Außenseite 88 der Triebwerksgondel 86 aus der in Fig. 15 gezeigten Schließstellung in die in Fig. 16 gezeigte Offenstellung verschwenkbar ist. Dabei schließt eine Außenseite der Abdeckklappe 92 in einem die Öffnung 91 verschließenden Betriebszustand bündig mit der Außenseite 88 der Triebwerksgondel 86 ab.

### Bezugszeichenliste

- 1: Gasturbinentriebwerk
- 2: Ölsystem
- 3: Welle
- 4 bis 6: Lagereinheit
- 7: Zwischengehäuse
- 8: vorderer Gehäusebereich
- 9: Lagerkammer
- 9A: Innenraum der Lagerkammer
- 10: Öltank
- 10A: Gehäuse des Öltanks
- 10A1: oberer Bereich des Gehäuses des Öltanks
- 10A2: unterer Bereich des Gehäuses des Öltanks
- 10B: Innenraum des Gehäuses des Öltanks
- 11: Förderpumpe
- 12: manuelle Befülleinheit
- 13: manuelle Druck-Befülleinheit
- 14: unterer Bereich des Öltanks
- 15: Ölentnahmeleitung
- 16: Remote-Befülleinheit
- 17: Druckbefüllventil
- 18: Befüllleitung zwischen der manuellen Befülleinheit und dem T-Stück
- 19: T-Stück
- 19A: weiteres T-Stück
- 20: weitere Befüllleitung zwischen dem Druckbefüllventil und dem weiteren T-Stück
- 21: zusätzliche Befüllleitung zwischen dem T-Stück 19 bzw. dem weiteren T-Stück 19A und dem Öltank 10
- 22: weiterer Öltank
- 23: weitere Befüllleitung zwischen dem weiteren Öltank und dem Druckbefüllventil
- 24: Befüllschnittstelle der manuellen Druck-Befülleinheit 13
- 25: zusätzliche Befüllleitung zwischen der manuellen Druck-Befülleinheit 13 und dem Druckbefüllventil 17
- 26: Rückführleitung
- 27: kombinierte Rückführleitung
- 28: weitere Rückführleitung
- 29: Ölabscheider
- 30: Druckbegrenzungsventil
- 31: Entlüftungsleitung zwischen dem Druckbegrenzungsventil und der Lagerkammer
- 32: weitere Entlüftungsleitung zwischen der Lagerkammer und dem Entlüfter 33
- 33: Entlüfter bzw. Breather
- 34: zusätzliche Rückführleitung zwischen dem Entlüfter und der Förderpumpe
- 35: Nebenaggregategetriebe
- 36: Entlüftungsleitung des Öltanks
- 37: Sensoreinrichtung der manuellen Befülleinheit
- 38: Leckageleitung des Druckbefüllventils
- 39: Leckageleitung der manuellen Befülleinheit 12
- 40: Drainmast
- 41 bis 44: kreisringförmiges Bauteil des Zwischengehäuses 7
- 45A bis 45H: Kernstreben
- 46: Einlaufbereich des Kernluftstromes
- 47: Drehmomentkasten des Zwischengehäuses 7
- 47A: Rückwand des Drehmomentkastens
- 48: Einlaufbereich des Nebenluftstromes
- 49A bis 49H: Nebenstromstreben
- 50: Ölleitung
- 51: Innenseite des kreisringförmigen Bauteils 41
- 53, 54: Leitung durch den Öltank
- 55: erste Seitenwand des Gehäuses des Öltanks
- 56: zweite Seitenwand des Gehäuses des Öltanks
- 57: kreisförmige Aussparung des Gehäuses des Öltanks
- 58: Öffnung der Entlüftungsleitung 36
- 59: Gehäuseseite
- 60: Gehäuseseite
- 61: unteres Ende des Gehäuses 10A
- 62: Öleinfüllstutzen
- 63: Gehäuse der manuellen Befülleinheit
- 64: Ölschauglas der manuellen Befülleinheit
- 65: Deckel des Öleinfüllstutzens
- 66: Einfüllöffnung
- 67: Innenraum des Gehäuses 63
- 68: Klappenventil
- 69: Prallplatte
- 70: Hohlraum
- 71: Ventilkolben
- 72: Federelement
- 73: erster Ventilsitz
- 74: erster Anschluss des Druckbefüllventils
- 75: zweiter Anschluss des Druckbefüllventils
- 76: Rückschlagventil
- 77: Rückschlagventil
- 78: zweiter Ventilsitz
- 79: dritter Anschluss des Druckbefüllventils
- 80: vierter Anschluss des Druckbefüllventils
- 81: fünfter Anschluss des Druckbefüllventils
- 82: Öffnung
- 83: Öffnung
- 84: Gehäuse des Drainmast
- 84A: Dichtelement
- 85: Innenseite der Wandung der Triebwerksgondel
- 85A: Wandung der Triebwerksgondel
- 86: Triebwerksgondel
- 87: Bohrung der Wandung der Triebwerksgondel
- 88: Außenseite der Triebwerksgondel
- 90: Ölstandsanzeige der manuellen Druck-Befülleinheit
- 91: Öffnung der Triebwerksgondel
- 92: Abdeckklappe
- 93: Montagestrebe des Drainmast
- R: radiale Richtung
- U: Umfangsrichtung
- Vmax: maximaler Ölstand im Öltank
- X: axiale Richtung
- XY: Horizontalebene
- Z: Hochrichtung
- α: Winkel

## Patentansprüche

1. Gasturbinentriebwerk (1) für ein Flugzeug, mit einem Ölsystem (2), das einen Öltank (10) umfasst, und mit wenigstens einer Welle (3), die über Lagereinheiten (4 bis 6) gehäuseseitig drehbar gelagert ist, wobei wenigstens eine der Lagereinheiten (4 bis 6) und der Öltank (10) in einer Lagerkammer (9) angeordnet sind,
**dadurch gekennzeichnet, dass**,
ein Innenraum (10B) eines Gehäuses (10A) des Öltanks (10) über eine Entlüftungsleitung (31) mit einem Entlüfter (33) in Verbindung steht, in dessen Bereich der Ölanteil der Luft reduzierbar ist.

2. Gasturbinentriebwerk nach Anspruch 1,
**dadurch gekennzeichnet, dass**
ein Innenraum (9A) der Lagerkammer (9) über eine Entlüftungsleitung (32) mit dem Entlüfter (33) in Verbindung steht.

3. Gasturbinentriebwerk nach Anspruch 1 oder 2,
**dadurch gekennzeichnet, dass**
in der Entlüftungsleitung (31) des Öltanks (10) ein Druckbegrenzungsventil (30) angeordnet ist, das die Entlüftungsleitung (31) des Öltanks (10) unterhalb eines definierten Druckes im Gehäuse (10A) des Öltanks (10) in Richtung der Lagerkammer (9) oder des Entlüfters (33) sperrt.

4. Gasturbinentriebwerk nach einem der Ansprüche 1 bis 3,
**dadurch gekennzeichnet, dass**
am Gehäuse (10A) des Öltanks (10) ein Ölabscheider (29) angeordnet ist, in dessen Bereich im Betrieb des Gasturbinentriebwerks (1) aus einem Luft-Öl-Volumenstrom Öl abscheidbar ist, wobei abgeschiedenes Öl über eine Ölleitung aus dem Ölabscheider (29) in den Öltank (10) und die vorgereinigte Luft über eine Luftleitung aus dem Ölabscheider (29) in Richtung des Entlüfters (33) oder des Innenraums (9A) der Lagerkammer (9) führbar ist, in dessen Bereich der Ölanteil der vorgereinigten Luft weiter reduzierbar ist.

5. Gasturbinentriebwerk nach einem der vorstehenden Ansprüche,
**dadurch gekennzeichnet, dass**
ein in Einbaulage des Öltanks (10) oberer Bereich (10A1) des Gehäuses (10A) kreisringförmig und ein sich daran anschließender unterer Bereich (10A2) in Umfangsrichtung (U) des Gehäuses (10A) des Öltanks (10) aufeinander zulaufende abgeflachte und das Volumen des Öltanks (10) begrenzende Gehäuseseiten (59, 60) aufweist.

6. Gasturbinentriebwerk nach Anspruch 5,
**dadurch gekennzeichnet, dass**
sich der untere Bereich (10A2) des Gehäuses (10A) des Öltanks (10) ausgehend vom oberen Bereich (10A1) des Gehäuses (10A) in Richtung eines unteren Endes (61) des Gehäuses (10A) in axialer Richtung (X) stetig verjüngt.

7. Gasturbinentriebwerk nach einem Ansprüche 1 bis 6,
**dadurch gekennzeichnet, dass**
das Gehäuse (10A) des Öltanks (10) in radialer Richtung (R) eine vorzugsweise kreisförmige Aussparung (57) begrenzt, die die Welle (3) in axialer Richtung (X) durchgreift.

8. Gasturbinentriebwerk nach einem Ansprüche 1 bis 7,
**dadurch gekennzeichnet, dass**
das Gehäuse (10A) des Öltanks (10) mehrere Leitungen (53, 54) aufweist, die in axialer Richtung (X) von einer ersten Seitenwand (55) des Gehäuses (10A) durch den Innenraum (10B) bis zu einer zweiten Seitenwand (56) des Gehäuses (10A) verlaufen.

9. Gasturbinentriebwerk nach Anspruch 8,
**dadurch gekennzeichnet, dass**
durch wenigstens eine der Leitungen (53) Öl durch den Öltank (10) in Richtung einer der Lagereinheiten (5, 6) und durch wenigstens eine weitere der Leitungen (54) Sperrluft zur Abdichtung der Lagerkammer (9) führbar ist.

10. Gasturbinentriebwerk nach einem der vorstehenden Ansprüche,
**dadurch gekennzeichnet, dass**
der Öltank (10) über ein Druckbefüllventil (17) mit einer Remote-Befülleinheit (16), über die Öl automatisiert aus einem weiteren flugzeugseitigen Öltank (22) in den Öltank (10) führbar ist, und mit einer manuellen Druck-Befülleinheit (13), von der ausgehend Öl manuell und druckgetrieben in den Öltank (10) einleitbar ist, in Wirkverbindung bringbar ist.

11. Gasturbinentriebwerk nach Anspruch 10,
**dadurch gekennzeichnet, dass**
eine die manuelle Druck-Befülleinheit (13) und das Druckbefüllventil (17) verbindende Befüllleitung (25) durch eine Nebenstromstrebe (49E) verläuft, die in radialer Richtung zwischen zwei ringartigen Gehäusebereichen (43, 44) verläuft und die diese fest miteinander verbindet.

12. Gasturbinentriebwerk nach Anspruch 10 oder 11,
**dadurch gekennzeichnet, dass**
das Druckbefüllventil (17) einen Ventilkolben (71) aufweist, der in drucklosem Zustand von einem Federelement (72) dichtend an einen ersten Ventilsitz (73) angelegt wird und die Verbindungen zwischen der Remote-Befülleinheit (16) und dem Öltank (10) sowie zwischen der manuellen Druck-Befülleinheit (13) und dem Öltank (10) sperrt und bei Anliegen eines Öffnungsdrucks seitens der Remote-Befülleinheit (16) oder seitens der manuellen Druck-Befülleinheit (13) die jeweilige Verbindung freigibt.

13. Gasturbinentriebwerk nach einem der Ansprüche 10 bis 12,
**dadurch gekennzeichnet, dass**
im Bereich eines ersten Anschlusses (74) des Druckbefüllventils (17), der mit der Remote-Befülleinheit (16) in Verbindung steht, und im Bereich eines zweiten Anschlusses (75), der mit der manuellen Druck-Befülleinheit (13) in Verbindung steht, jeweils ein Rückschlagventil (76, 77) angeordnet ist, die den zugeordneten Anschluss (74, 75) jeweils freigeben, wenn der Druck im Druckbefüllventil (17) jeweils kleiner ist als in den Befüllleitungen (23, 25) zwischen der Remote-Befülleinheit (16) und dem Druckbefüllventil (17) sowie zwischen der manuellen Druck-Befülleinheit (16) und dem Druckbefüllventil (17) und der Ventilkolben (71) in drucklosem Zustand an einem zweiten Ventilsitz (78) dichtend anliegt und einen dritten Anschluss (79) von einem vierten Anschluss (80) des Druckbefüllventils (17) trennt, wobei der dritte Anschluss (79) mit der Entlüftungsleitung (36) des Öltanks (10) in Verbindung steht und vom vierten Anschluss (80) des Druckbefüllventils (17) eine Leckageleitung (38) abzweigt, die eine Verbindung mit einem Drainmast (40) herstellt, der im Inneren einer Triebwerksgondel (86) und an eine Außenseite (8) der Triebwerksgondel (86) angrenzend montiert ist.

14. Gasturbinentriebwerk nach Anspruch 13,
**dadurch gekennzeichnet, dass**
eine Öffnung (58) der Entlüftungsleitung (36) im Innenraum (10B) des Öltanks (10) in Einbaulage des Öltanks (10) und während Fluglagen eines mit dem Gasturbinentriebwerk (1) ausgeführten Flugzeuges, während den das Flugzeug gegenüber einer Horizontalfluglage um eine Längsachse einen Rollwinkel von +/- 40° und um eine Querachse einen Nickwinkel von +/- 40° ausführt, um einen definierten Offset oberhalb eines definierten maximalen Ölstandes (Vmax) im Öltank (10) angeordnet ist.

15. Gasturbinentriebwerk nach einem der Ansprüche 10 bis 14,
**dadurch gekennzeichnet, dass**
das Druckbefüllventil (17) über die Entlüftungsleitung (36) mit einer manuellen Befülleinheit (12) in Verbindung steht.
